# EUROPEAN PATENT SPECIFICATION

(11) **EP 2 312 109 B1**
(45) Date of publication and mention of the grant of the patent: **13.03.2013**
(21) Application number: 10187261.2
(22) Date of filing: 12.10.2010
(51) Int. Cl.: E06B 7/02, B60J 1/16, B60J 1/20

(54) **Window assembly for a vehicle and vehicle provided with said window assembly**
Fensteranordnung für ein Fahrzeug und Fahrzeug mit der Fensteranordnung
Ensemble formant fenêtre pour un véhicule et véhicule fourni dudit ensemble formant fenêtre

(30) Priority: 14.10.2009 IT MI20091757
(43) Date of publication of application: 20.04.2011
(73) Proprietor: Sguinzi Pietro S.p.A., 20083 Gaggiano (MI) (IT)
(72) Inventor: Lovati, Stefano, 20083 Gaggiano MI (IT); Baroni, Fabrizio, 20090 Assago MI (IT)
(74) Representative: Postiglione, Ferruccio

(56) References cited:
- WO-A1-2007/097674
- AU-A- 7 113 981
- DE-A1- 19 610 428
- JP-A- 10 299 354
- US-A1- 2004 162 017
- US-A1- 2009 243 332

## Description

The present invention relates to a window assembly for a vehicle, such as, for example, a truck, a tram, a bus, metro, or the like, and a vehicle provided with such a window assembly.

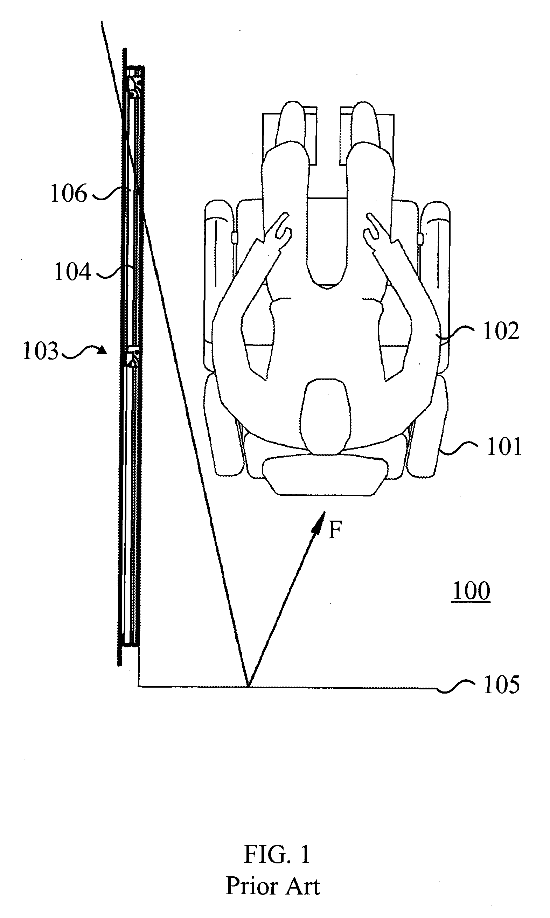

Referring to Figure 1, a vehicle, for example of the above type, usually comprises a driving cabin 100, with a driver seat 101 for a driver 102. On one side of the driver seat 101 a window assembly 103 is provided, equipped with at least a, usually sliding, movable service window 104, for air-change within the driver cabin 100 itself. The service window 104 has the function of opening and closing a service opening 106 delimited by the window assembly.

The driver cabin 100 is usually at least partially insulated from the rest of the vehicle and to this end it is delimited at the back by a rear wall 105.

It is to be noted that, in the present description and in appended claims, the terms "front" and "rear" are to be intended with reference to the normal conditions of use of the window assembly, so under the conditions of the window assembly associated to a vehicle. As a result, the front side and the rear side of the window assembly are to be intended as the side of the window assembly facing the front portion of the vehicle and the side of the window assembly facing the rear portion of the vehicle, respectively, when the vehicle provided with the window assembly is associated to the vehicle. In particular, the front side faces the moving direction of the vehicle. Likewise, also the terms "upper" and "lower" are to be intended with reference to the normal conditions of use of the window assembly.

During the use of the vehicle, in several circumstances the need arises to change air within the vehicle itself and in particular within the driver cabin. When, while the vehicle is moving, the driver 102 opens the window 104 of the window assembly 103, an air stream is generated, which follows fairly the path illustrated by the arrow F in Figure 1 (which schematically denotes the average trend). In particular, the air enters the driver cabin 100 through the service opening 106, hits the rear wall 105 and it is deflected toward the driver 102 therefrom, who, therefore, is struck by the moving air from behind.

The above described situation is of course undesirable. In fact, the air which reaches the driver from behind may compromise his/her health, for example causing stiff neck, rheumatic pains or several kinds of inflammation.

Similar situations to those described with reference to the driver cabin of a driver may also occur at further locations of the vehicle in presence of a wall which deflects the air (for example, at the rear rows in a bus or a tram).

Further, similar problems may occur also in absence of a wall the air interacts with. In fact, also in absence of deflecting walls, the air which enters the vehicle, in particular if this is travelling at a high speed, may cause, anyway, harmful air streams or turbulences for those who are travelling inside the vehicle itself.

A window assembly according to the preamble of claim 1 is disclosed in JP 10 299 354 A.

It is an object of the present invention to provide a window assembly that, when applied to a vehicle, allows the air-change inside the vehicle it self, while limiting the generation of potentially harmful streams for those who are on-board.

This and other objects are achieved by means of a window assembly according to claim 1 and a vehicle according to claim 10.

For better understanding the invention and appreciating the advantages thereof, some exemplary, and not limitative embodiments thereof will be disclosed below, referring to the attached Figures, wherein:
Figure 1 is a schematic plan illustration of the operation of a window assembly according to the prior art;
Figure 2 is a side view of a window assembly according to the invention in a particular condition of use;
Figure 3 is a side view of a window assembly in Figure 2 in a further condition of use;
Figure 4 is a further side view of the window assembly in Figure 2;
Figure 5 is a cross-sectional view according to line V-V of the window assembly in Fig. 2;
Figure 6 is a cross-sectional view according to line VI-VI of the window assembly in Fig. 2;
Figure 7 is a cross-sectional view according to line VII-VII of the window assembly in Fig. 2;
Figure 8 is a perspective exploded view, of the window assembly in Figure 2;
Figure 9 is a cross-sectional view according to line IX-IX of the window assembly in the condition of use in Fig. 3;
Figure 10 is a cross-sectional view according to line X-X of the window assembly in the condition of use in Fig. 3;
Figures 11a and 11b are cross-sectional views of two different conditions of use, respectively, according to line XI-XI of the window assembly in Figure 2.

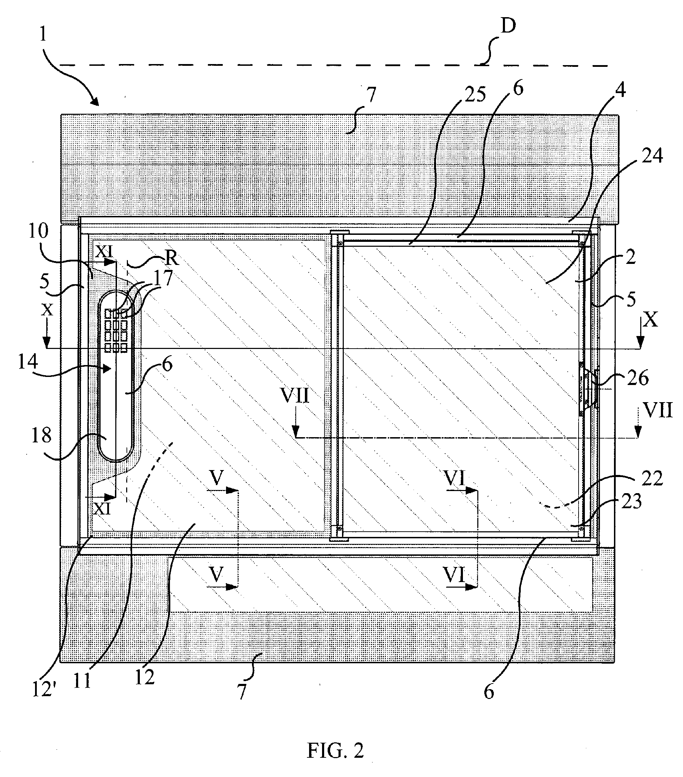

Referring to Figures 2-11, a window assembly is denoted by reference number 1.

The window assembly 1 is intended to be associated to a vehicle, such as a truck, a tram, a bus, metro, or the like. However, it is to be noted that such types of vehicles are mentioned as a way of example, and not as a limitation. Preferably the window assembly 1 is intended for the application on a vehicle at a driver cabin thereof, in particular on one side of the driver seat adapt to accommodate the vehicle driver. However, the window assembly according to the invention may be arranged in a different zone of the vehicle.

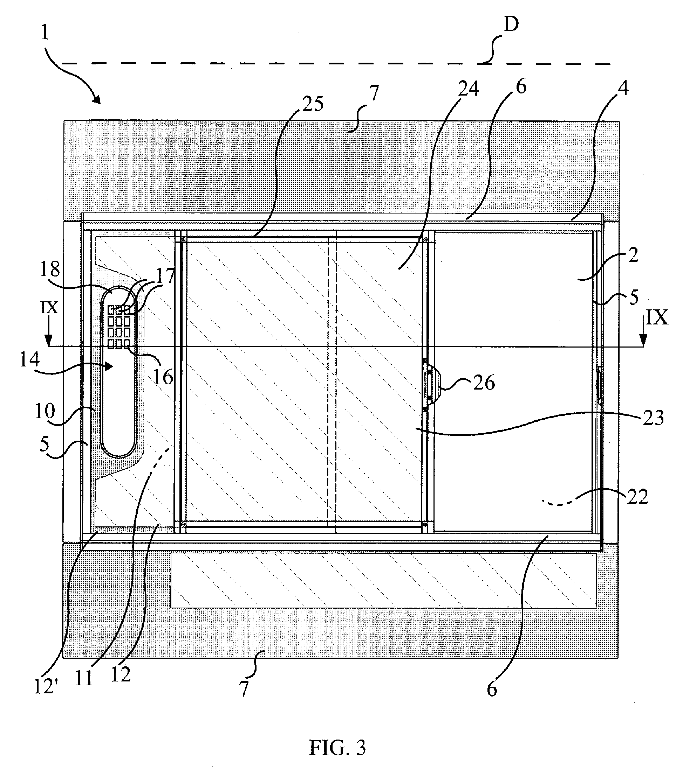

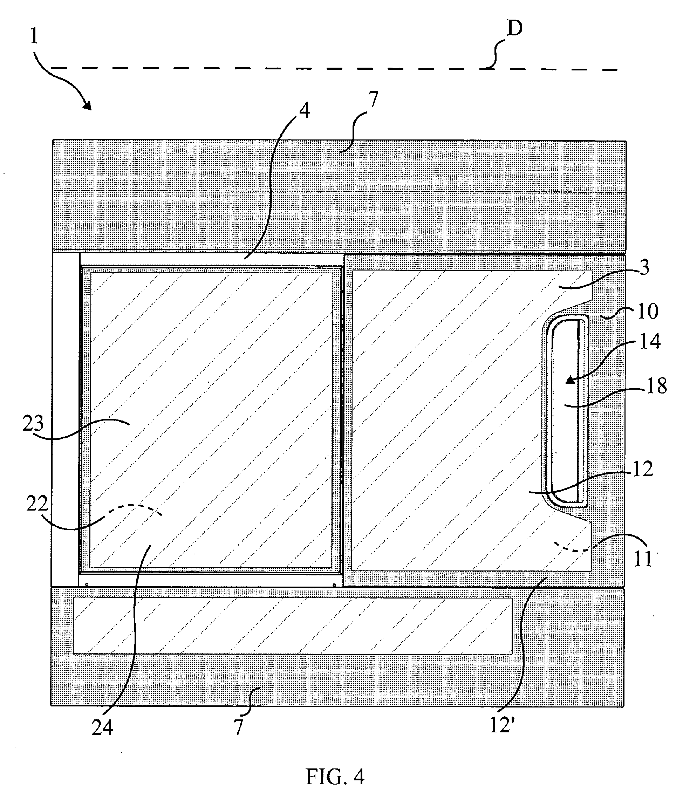

The window assembly 1 may be an integral part of the vehicle or, preferably, connected or connectable thereto. Once associated to the vehicle, the window assembly has one side facing the interior of the vehicle and one facing outside the vehicle. In the present description and in the appended claims the side facing the interior of the vehicle - then, for example, facing the driver seat - is denoted as internal side 2 (side views of Figures 2 and 3), whereas the side facing the exterior of the vehicle - opposite the internal side 2 - is denoted as the external side 3 (side view in Figure 4).

The window assembly 1 comprises a main frame 4 having the function of supporting the window assembly 1 itself and allowing the connection thereof with the vehicle. Such a connection may take place through suitable connection means known per se, which, therefore, are not disclosed herein.

The main frame 4 may be variably conformed.

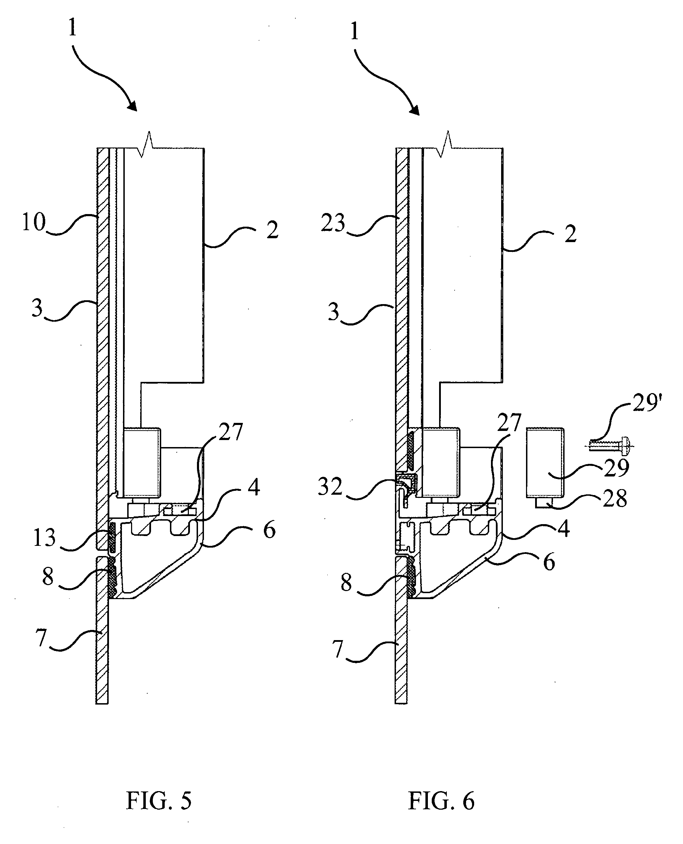

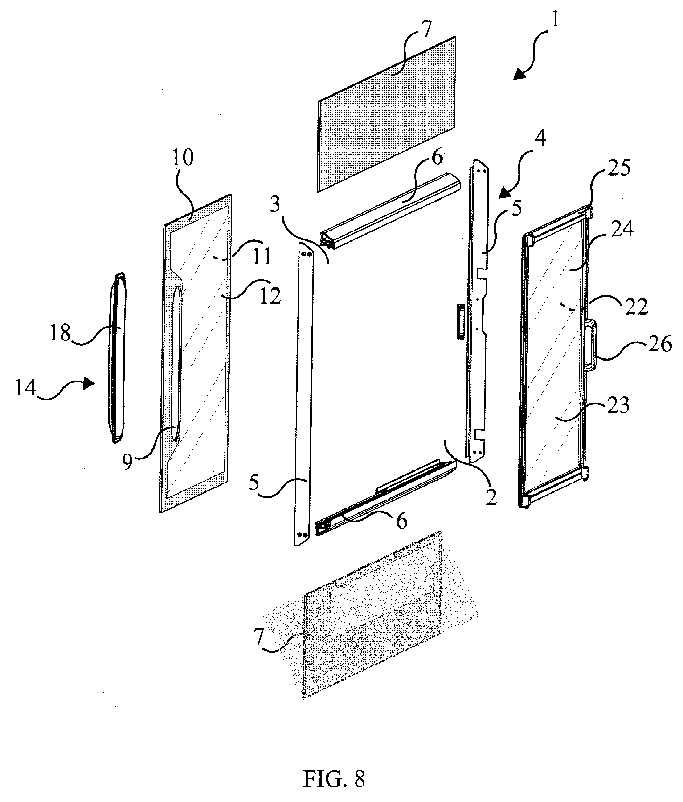

According to a possible embodiment, the main frame comprises two uprights 5 and the same number of cross-girders 6 (Figure 8). The cross-girders 6 preferably comprise tubular bodies with a shaped cross-section, in order to allow an easy connection with further elements of the window assembly. For example, to the window assembly 1 one or more panels 7 may be associated mainly having the function to conform the window assembly shape to that of the vehicle when these are connected to each other. For example, the panels 7 may have shapes and sizes matching those of the external body of the vehicle (for example the nacelle of a tram or a bus). Preferably the panels 7 are made of glass or similar transparent materials, but may eventually comprise also opaque portions. The panels 7 may be connected to the cross-girders 6 on the external side 3, for example by means of a bonding 8 (Figures 5 and 6) or by means of mechanical anchorage. Alternatively, the panels 7, for example, may be positioned in corresponding panel guides (not shown in the Figures) formed by the cross-girders 6, respectively.

The main frame 4 of the window assembly 1 delimits a discharge opening 9. Such a discharge opening 9 has the function of allowing the air within the vehicle to be discharged, in particular in the driver cabin, outside it according to modes which will be disclosed in detail below.

According to a possible embodiment, the main frame 4 comprises an auxiliary frame 10 which delimits the above discharge opening 9. The auxiliary frame 10 may be connected to the cross-girders 6 on the external side, for example by means of a bonding 13 (Figure 5) or by means of mechanical anchoring. Alternatively, the auxiliary frame 10 may be connected to the cross-girders 6, for example, by inserting it in suitable grooves (not shown in the Figures) arranged in the cross-girders 6 themselves and/or by uprights 5.

The auxiliary frame 10 comprises, preferably, a transparent portion, which serves as an auxiliary window 12, suitable to occlude an auxiliary opening 11. Most preferably, the auxiliary frame 10 is fully made of a transparent material, for example glass. Possibly, it may comprise an opaque portion 12' (for example a serigraphy which makes part of the contour opaque).

The window assembly 1 comprises means 14 for closing the discharge opening 9.

The closure means 14 are capable of assuming a closed configuration and an open configuration and possibly one or more intermediate configurations between such open and closed configurations. In the closed configuration, the closure means 14 keep the discharge opening 9 closed, so that, under the conditions of use of the window assembly 1, the air is substantially prevented from passing between the interior and outside of the vehicle. In the open configuration, instead, the closure means leave the discharge opening 9 open or at least partially open. Thereby, the air-change between the interior and outside of the vehicle through the discharge opening 9 is allowed.

The closure means 14 are conformed such to remain in the open configuration until, at the discharge opening 9 between the internal side 2 and the external side 3 of the window assembly 1, a higher pressure difference persists than a predetermined pressure difference value and to reach the closed configuration following the lowering of such pressure difference below the predetermined value of the pressure difference.

Therefore, when between the internal side 2 and the external side 3 of the window assembly 1, in the proximity of the discharge opening 9 - and therefore also in the proximity of the closure means itself - a pressure difference is exceeded by a predetermined value, the closure means 14 moves to its open configuration, thereby freeing the discharge opening 9 and thus enabling the air to pass therethrough, and remains in such a configuration until such pressure conditions persist. In order for the closure means 14 to leave the open configuration, the pressure difference between the internal side 2 and the external side 3 needs to return below the predetermined pressure difference value, which guarantees the open configuration is kept.

In other words, the closure means 14 remain in its open configuration if in one of its sides a suitable pressure drop is available.

This feature of the closure means 14 may be conveniently employed for checking the opening and closing of the closure means 14 according to the vehicle speed on which the window assembly 1 is installed. Indeed, when the vehicle is moving, at the discharge opening 9 and at the closing means, a pressure drop arises on the external side 3, due to the different speed of air in respect to the window assembly (about zero on the internal side 2 and different from zero on the external side 3). The pressure acting on the closure means 14 on the internal side 2 is then greater than the pressure acting on the external side 3 thereof. In this way, the previously mentioned pressure difference arises, which causes the closure means 14 to open.

According to the foregoing, it is clear that the opening of the closure means 14 is also linked to the vehicle speed on which the window assembly 1 according to the invention is installed. Therefore, a predetermined vehicle speed corresponds to the predetermined value of the pressure difference between the internal side 2 and the external side 3, which causes the closure means 14 to open and ensures it remains in the open configuration.

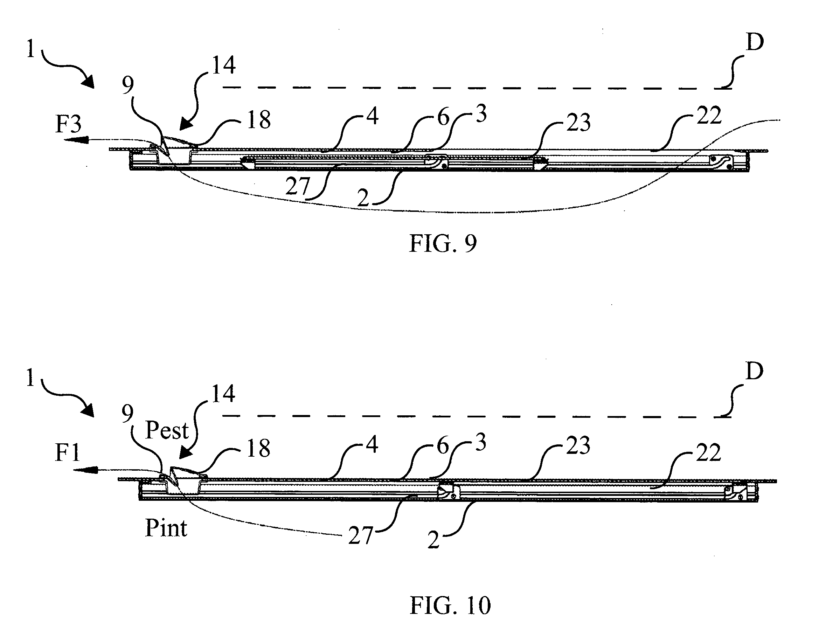

The above disclosed behaviour may be better understood referring to Figure 10. When the vehicle is moving, the external pressure Pest in the proximity of the closure means 14 on the external side 3 of the window assembly 1 is lower than the inner pressure Pint in the proximity of the closure means 14 on the internal side 2. If the difference between the internal pressure Pint and the external pressure pest is greater than a predetermined value, the closure means 14 remain in the open configuration. Therefore, the air within the vehicle, i.e. on the internal side 2 of the window assembly 1, is spontaneously discharged through the discharge opening 9. The air on average follows the path denoted by arrow F1. Such a path is followed also in presence of a possible rear wall located in a rear position in respect to the discharge opening 9 (not illustrated in the Figures).

So, as it will be appreciated by those skilled in the art, due to the presence of the closure means 14 conformed according to what disclosed above, the air-change can be carried out inside the vehicle without having any air streams arisen, which is potentially harmful for those inside the vehicle itself. Such a situation is for example particularly advantageous when the window assembly 1 is positioned next to the driver seat in the vehicle cabin. Moreover, given the pressure conditions on which the opening of the closure means 14 is based, generally an opposite direction, i.e. an incoming air stream from outside towards the inside, of the air in respect to the one described is not possible, because it would require a higher external pressure pest than the internal pressure Pint, and this would result in a higher relative speed of the air on the internal side 2 in respect to the external side. Such a condition, generally, does not occur under the normal conditions of use of the window assembly. Therefore, the undesired input of cold air from outside in winter or hot air in summer is prevented, as a further protection for the health of the vehicle users.

Advantageously, the closing means 14 is further conformed such to keep the closed configuration when substantially no pressure difference is present at the discharge opening 9 between the inner 2 and outer 3 sides of the window assembly 1. In other words, when the pressure on the internal side 2 and the pressure on the external side 3 at the closure means 14 are nearly the same, the closure means 14 keeps the discharge opening 9 closed, and therefore it does not allow the air to pass from inside to outside or from outside to inside therethrough. Such a condition usually occurs when the vehicle, on which the window assembly 1 according to the invention is installed, is stopped.

It is evident that the predetermined value of the pressure difference may be selected as a function of the vehicle speed beyond which it is desired that the closure means 14 move to the open configuration and keep such a condition. For example, when substantially no pressure difference is present, the closure means 14 move to the open configuration also in the presence of very low speeds of the vehicle. Preferably, such a predetermined pressure difference value between the internal side 2 and the external side 3 is higher than zero, so that switching of the closure means 14 to the open configuration occurs for a sufficiently high speed of the vehicle. Below, possible constructional solutions of the window assembly will be disclosed, which allow such a technical effect to be achieved.

In order to guarantee that, after stopping the vehicle, and therefore when the pressure difference between the internal side 2 and the external side 3 returns below the predetermined pressure difference value, the air is prevented from passing through the discharge opening 9, advantageously the window assembly 1 comprises return means suitable for urging the closure means towards its closed configuration starting from the open configuration or an intermediate configuration between the open and closed configurations. According to a possible embodiment, such return means comprise resilient means. This aspect will be also disclosed in more detail below, with reference to particular embodiments of the invention.

It is to be noted that the return means not only has the functions to return the closure means 14 in its closed configuration, ma also tend to oppose it from passing to the open configuration starting from the closed configuration. Therefore, it is clear that the higher the spring constants of the resilient means are, the higher is the predetermined pressure difference value between the internal side 2 and the external side 3 (or the vehicle speed) which allows the closure means 14 to move to the open configuration thereof.

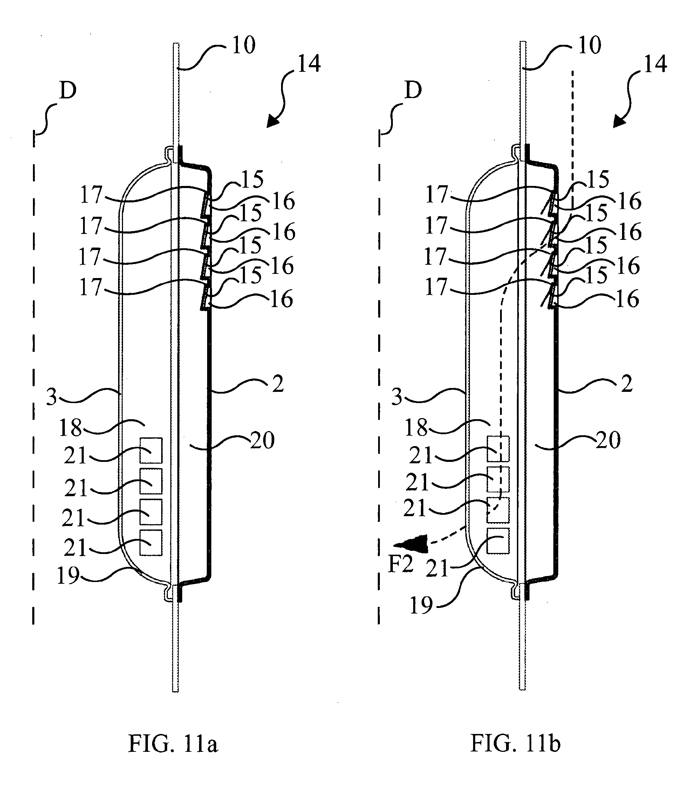

Advantageously, the closure means 14 comprise one or more closure elements 15, each being configurable according to the open configuration (Figure 11b) and the closed configuration (Figure 11a). Preferably, the closure means 14 comprises a plurality of said closure elements 15, each arranged at a respective portion 16 of the discharge opening 9 or at a plurality of such portions 16 of the discharge opening 9. Thereby, the discharge opening is closed only when each of the closure elements is in the closed configuration thereof.

The portions 16 of the discharge opening 9 are preferably arranged as a grid (see for example Figure 2) .

The closure elements 15 may be configured in several ways.

According to a possible embodiment, the closure elements 15 comprise flexible membranes, capable of deforming, in particular of bending, in presence of a pressure difference acting on their two internal and external sides. Each of the flexible membranes is only partially attached to the main frame 4 and it is free to move in the remaining free portions, so that it can deform and bend. Preferably, the membranes are connected to the main frame 4 at linking tracts 17 oriented parallel in respect to the moving direction D of the vehicle when the window assembly 1 is associated thereto. Referring, for example, to Figure 2, the linking tracts 17 are arranged orthogonally to an axis R transversal in respect to the moving direction D. Under the normal conditions of use, the membranes, in their open configuration, bend to the external side 3 of the window assembly.

Each membrane, when, due to the effect of the pressure difference between the internal side and the external side, bends, reaching the open configuration, it also elastically loads, thereby realizing the above described resilient return means. Thereby a return to the closed configuration is achieved when the pressure difference decreases. In this case, the predetermined value of the pressure difference is affected by the elasticity of the flexible membranes.

In alternative or in addition, the membranes may be conformed such that they move to the closed configuration, when the vehicle is stopped, as an effect of gravity.

According to a further possible embodiment, the closure elements 15 comprises substantially rigid bulkheads, pivotable in respect to said main frame 4. The closed configuration of the closure means corresponds to a closed position of the rigid bulkheads, whereas the open configuration corresponds to an open position of the rigid bulkheads. The movements between such open and closed positions take place, preferably, according to rotations about axis oriented parallel in respect to the moving direction D of the vehicle when the window assembly is associated thereto. Referring, for example, to Figure 2, the rotation axis of the rigid bulkheads are arranged orthogonally in respect to axis R, transversal to the moving direction D. In their open position, the rigid bulkheads project to the external side 3 of the window assembly.

In alternative or in addition, the bulkheads may be conformed so that they move to the closed configuration, when the vehicle is stopped, as an effect of gravity.

It is to be noted that, according to a further possible embodiment (not shown in the Figures), the linking tracts 17, at which the closure elements 15 (membranes or rigid bulkheads) are connected according to the above said modes to the main frame 4, are oriented transversally, preferably orthogonally, in respect to the moving direction D of the vehicle when the window assembly 1 is associated thereto.

In order to guarantee the return of the rigid bulkheads to their closed position, they can be associated to suitable resilient means, for example torsion springs which oppose to their rotation towards the open position. According to this configuration, the predetermined pressure difference value between the internal and the external sides is affected by the spring constant of the above mentioned torsion springs.

It is to be noted that, in both the above described embodiments (flexible membranes and rigid bulkheads), in the further tracts in respect to the linking tracts 17 the closure elements are advantageously unilaterally constrained, so that the opening thereof (deflection in case of membranes and rotation in case of the bulkheads) towards the external side 2 is prevented.

According to a possible embodiment, the closure means 14 comprises an air-blower 18 connectable to the main frame 4, preferably to the auxiliary frame 10, at the discharge opening 9 (see, for example, Figure 8). Such an air-blower may include, in particular, the above mentioned closure elements 15 (flexible membranes and rigid bulkheads).

The air-blower 18 and the discharge opening, preferably, have an elongated shape, and, even more preferably, they develop in a transversal direction, in particular orthogonally, in respect to the moving direction D.

According to an embodiment, the air-blower 18 comprises an envelope 19 which delimits a pressure chamber 20 therein (Figures 11a and 11b). The pressure chamber 20 is in communication with the outside through one or more communication opening 21 and with the inside through the closure element 15 and the portions 16 of the discharge opening. When the closure elements 15 are in the open configuration (Figure 11b), the air flows from the internal side 2 through the portions 16 of the discharge opening 9, then through the pressure chamber 20, and it is discharged therefrom on the external side 3 through the communication openings 21. Under such circumstances, the air approximately follows the path schematically illustrated by the arrow F2.

When the closure elements 15 are in the closed configuration (Figure 11a) , the air is prevented from moving between the internal 2 and external 3 sides.

According to an embodiment, the main frame 4 delimits a service opening 22 and the window assembly 1 comprises a service window 23 movable at the service opening 22 (Figures 2-4, 8). The service opening 22 is, preferably, delimited at the top and at the bottom by the cross-girders 6, and laterally by a side of the auxiliary structure 10 and by the front upright 6.

The service window 23 is movable between a closed position and an open position. When the service window 23 is in its closed position (Figures 2 and 4), the service opening 22 is closed, whereas when the service window 23 is in the open position (Figure 3), the service opening 22 is at least partially open and therefore it allows the air to pass between the internal side 2 and the external side 3 of the window assembly 1.

The service window 23, preferably, comprises a transparent portion 24 and a support portion 25 of the transparent portion 24, which allows also the service window 23 to move in respect to the main frame 4. To the support portion 25 also a handle 26 may be associated, facing the internal side 2 of the window assembly 1, which allows the user to move the service window 23 between its open and closed positions.

The service window 23 may be movable in respect to the main frame 4 according to multiple modes. According to a preferred embodiment, the service window 23 is slidably movable in respect to the main frame 4, preferably according to a sliding direction almost parallel to the moving direction D of the vehicle when the window assembly is associated thereto (according to an alternative embodiment not illustrated in the Figures, the sliding direction of the service window 23 may be transversal, in particular orthogonal, to the moving direction D of the vehicle). Still more preferably, the service window 23 is connected to the main frame 4 such that its movement from the closed position to the open position occurs according to a direction from a front position to a rear position of the window assembly. Such a situation is illustrated, for example, in Figures 2 and 3, which show the window assembly from its internal side 2. In Figure 2 the service window 23 is in the closed position. By acting on the handle 26 and urging it along the sliding direction from a front position to a rear position, the service window 23 moves along the sliding direction until it reaches its open position (Figure 3). Possibly, the service window 23 may be stopped in any intermediate positions between the open position and the closed position.

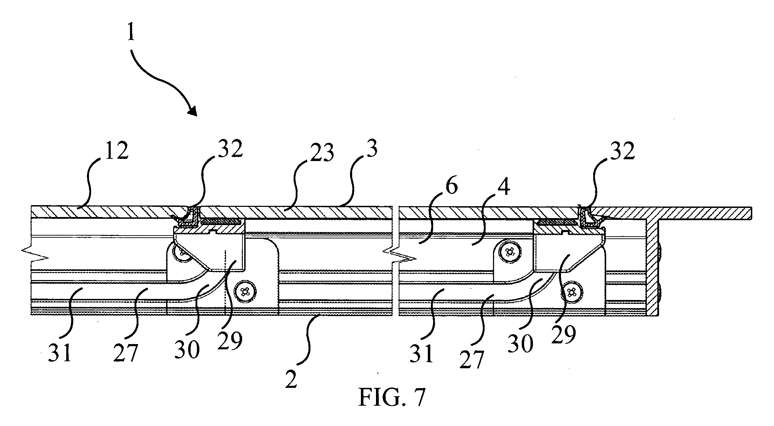

In order to allow the above movement of the service window 23, the window assembly 1 advantageously comprises suitable guide means. According to an embodiment, the main frame 4, in particular the cross-girders 6, comprise guide tracks 27 suitable to accommodate sliding portions 28 of the service window 23 (Figures 6 and 7). The sliding portions 28 are preferably shaped as projecting parts at the upper and lower ends of support blocks 29 removably connected to the service window 23 on the internal side 2 of the window assembly. The blocks 29 may be connected to the service window 23 through suitable connection elements, for example through threaded connection elements 29', which may be arranged by operating from the internal side 2 of the window assembly 1.

In general, the service window 23 may be connected to the main frame 4 through connection means conformed so that the service window 23 is removable from, as well as connectable to, the main frame 4 of the internal side 2. Such connection means are preferably arranged on the external side 2 of the window assembly 1. The blocks 29 and the connection elements 29' are examples of such a connection means. In alternative or in addition, it may be provided that the guide tracks 27 themselves are removable from the main frame 4 from the external side 2, so that also the service window 23 may be removed from the same side.

It is to be noted that the above connection means may be provided in any window assembly wherein a main frame and a window associated thereto, for example movable in respect thereto, are provided. Then, such connection means may be, for example, also in a window assembly without the discharge opening 9 of the closing means 14 according to the present invention.

Preferably, the guide tracks 27 are shaped such that, when the service window 23 is in the closed position, it forms, on the external side 3, a substantially continuous surface with the surfaces of adjacent parts of the window assembly and/or of the vehicle when the window assembly is associated thereto. In particular, in the closed position, the service window 23 is flush with the auxiliary window 12 (Figure 7). Still more preferably, the guide tracks 27 are shaped such that the service window 23, when in its open position, is arranged on the internal side 2 of the window assembly 1. In order to achieve the above described movement of the service window, the guide tracks 27 may comprise a curved portion 30 suitable to guide the service window 23 to/from the closed position, and a rectilinear portion 31 arranged on the internal side 2 of the window assembly for guiding the service window 23 to/from the closed position (Figure 7).

In order to guarantee that the service window 23 stops in the open position, suitable stops may be provided.

Preferably, when the service window 23 is in the open position, it overlaps at least partially the auxiliary window 12. In fact, the auxiliary opening 11 is arranged between the service opening 22, preferably arranged at the front in respect to the window assembly 1, and the discharge opening 9, preferably arranged at the rear in respect to the window assembly 1.

Advantageously, in order to guarantee a tightness against possible seepage, as well as for damping possible collisions between the service window 23 and the main frame 4 when the service window reaches its closed position, in the main frame 4, at the service opening 22 and/or along the side edges of the service window 23, suitable sealing means may be provided, for example gaskets 32.

Referring now to Figures 9 and 10, the synergic effect provided by the simultaneous presence of the closure means 14 and the service window 23 will be disclosed.

When the service window 23 is in the closed position, the closure means 14 acts according to what already disclosed above (Figure 10). Therefore, the closure means 14 allows the air to be discharged from inside the vehicle to outside when a predetermined pressure differential value is exceeded between the internal side 2 and the external side 3 at the discharge opening 4 in the proximity of the closure means 14. Such a situation occurs, in particular, when the vehicle, on which the window assembly 1 is arranged, is moving at above a predetermined speed.

When the service window 23 is in the open position (Figure 9) the air enters from outside inside the vehicle through the service opening 22. If the vehicle is moving, this air may also enter at a high speed. Due to the presence of the closure means 14, which, under such circumstances, remains in their open configuration, the air follows, approximately, the path schematically denoted in Figure 9 by arrow F3. In particular, the air enters inside the vehicle through the service opening 22 and it is sucked outside by the discharge opening 9. So, also in the presence of the open service window 23, the incoming air is prevented from being deflected against the driver or, in general, the user of the vehicle, and it is forced to follow approximately a predetermined path which limitedly involves the user. The simultaneous presence of the service window 23 and the closure means 14, guarantees that the driver or the user of the vehicle are not struck by air streams, which are dangerous or harmful for his/her health.

It is to be noted that, as an alternative to the closure means 14 shaped according to what disclosed, the window assembly 1 may comprise a discharge window (not shown in the Figures) arranged at the discharge opening, in turn arranged at the rear in respect to the service opening provided with the service window 23 with the described features. The discharge window is pivotably associated to the main frame 4, in particular about an axis, arranged transversally, preferably orthogonally, to the moving direction D of the vehicle when the window assembly is associated thereto. The discharge window is movable between a closed position, wherein the discharge opening is closed, and an open position, wherein it leaves the discharge opening at least partially open. The discharge window is preferably hinged to the main frame at one of the front ends thereof. Then in its open position, the discharge window faces outside the vehicle. Moving the discharge window may occur manually or alternatively it may be driven by a suitable actuator, for example an electric motor. Also in this case, when the service window and the discharge window are in the open position and the vehicle is moving, the air follows an analogous path as that denoted by arrow F3 in Figure 9, thereby limiting air streams, harmful for the user.

From the above description, it will be appreciated by those skilled in the art, that the window assembly according to the invention, when applied to a vehicle, allows the air-change therein without general air streams, potentially harmful for the user, being generated.

It will be particularly appreciated by those skilled in the art that the window assembly is advantageous when associated to the driver cabin of a vehicle, in particular of a vehicle such as a truck, a tram, a bus, a metro, since it remarkably reduces the harmful air currents encountered by the driver during his/her service inside the driver cabin, which is often several hours long.

Therefore, the window assembly according to the invention reduces the risk of physical problems, such as stiff neck, rheumatic pains or general inflammations of the driver or any user of the vehicle provided with such a window assembly.

To the above-described embodiments of the window assembly according to the invention, those skilled in the art, in order to fulfil specific incidental needs, can make several additions, modifications or replacements of elements with other operatively equivalent elements, however without departing from the scope of the appended claims.

## Claims

1. A window assembly (1) for a vehicle, having an internal side (2) and an external side (3), intended to face the interior and the outside of the vehicle, respectively, said window assembly (1) comprising a main frame (4) delimiting a discharge opening (9) and closure means (14;15) of said discharge opening (9), which can be configured according to a closed configuration, wherein they keep the discharge opening (9) closed, and an open configuration, wherein they leave the discharge opening (9) at least partially open, wherein said closure means (14; 15) are configured such that they remain in the open configuration until at the discharge opening (9) a pressure difference persists higher than a predetermined pressure difference value between said internal (2) and external (3) sides of the window assembly (1), and that they move to the closed configuration following said pressure difference drop below said predetermined value, wherein said main frame (4) delimits a service opening (22) and said window assembly (1) comprises a service window (23) movable between a closed position, wherein the service window (23) closes the service opening (22), and an open position, wherein the service window (23) leaves the service opening (22) at least partially open, **characterised in that** said service opening (22) is arranged at the front in respect to said discharge opening (9) with reference to the conditions of the window assembly associated to the vehicle wherein the front side faces the moving direction (D) of the vehicle,
wherein said closure means (14; 15) are configured such as to open when the pressure acting on the closure means on the internal side (2) is greater than the pressure acting on the external side (3) thereof, so that said pressure difference between said internal (2) and external (3) sides of the window assembly (1) arises, such that air on the internal side (2) of the window assembly (1) is spontaneously discharged through the discharge opening (9).

2. The window assembly (1) according to claim 1, wherein said closure means (14; 15) are configured such that they remain in the closed configuration when substantially no pressure difference is present between the discharge opening (9) and said inner (2) and outer (3) sides of the window assembly (1).

3. The window assembly (1) according to claim 1 or claim 2, comprising return means adapt to force the closure means (14;15) towards their closed configuration starting from the open configuration or from a configuration intermediate between said open and closed configurations.

4. The window assembly (1) according to the previous claim, wherein said return means comprises resilient means.

5. The window assembly (1) according to any of the previous claims, wherein said closure means comprises one or more closure elements (15) arranged at respective one or more portions (16) of said discharge opening (9) such that, when all the closure elements (15) are in the closed configuration, said discharge opening (9) is closed.

6. The window assembly (1) according to claim 5, wherein said one or more closure elements (15) comprise substantially rigid bulkheads, pivotable in respect to said main frame (4) about axes of rotation oriented such that they are arranged transversely or parallel in respect to the moving direction (D) of said vehicle when the window assembly (1) is associated thereto.

7. The window assembly (1) according to claim 5, wherein said one or more closure elements (15) comprise flexible membranes linked to said main frame (4) at linking tracts oriented such that they are arranged transversely or parallel in respect to the moving direction (D) of said vehicle when the window assembly (1) is associated thereto.

8. The window assembly (1) according to any of the previous claims, wherein said closure means comprise an air blower (18) connected or connectable to said main frame (4) at the discharge opening (9).

9. The window assembly (1) according to any of the previous claims, wherein said service window (23) is slidingly movable in respect to said frame (4) according to a sliding direction substantially parallel or transversal in respect to the moving direction (D) of said vehicle when the window assembly (1) is associated thereto.

10. A vehicle comprising a window assembly (1) according to any of the previous claims.

11. The vehicle according to the previous claim, comprising a driver cabin having a driver seat suitable for accommodating the vehicle driver, said window assembly (1) being located next to the driver seat.

12. The vehicle according to the previous claim, comprising a rear wall which delimits the driver cabin at the rear, said discharge opening (9) of the window assembly being located at the front in respect to said rear wall.

13. The vehicle according to any claim 10-12, included in the group consisting of: a truck, a tram, a bus, a metro.

## Patentansprüche

1. Fensterbaugruppe (1) für ein Fahrzeug, mit einer internen Seite (2) und einer externen Seite (3), die dem Imeren bzw. dem äußeres des Fahrzeugs zugewandt sein sollen, wobei die Fensterbaugruppe (1) einen Hauptrahmen (4) aufweist, der eine Ablassöffnung (9) und Schließmittel (14; 15) der Ablassöffnung (9) begrenzt, die gemäß einer geschlossenen Konfiguration, in der sie die Ablassöffnung (9) geschlossen halten, und einer offenen Konfiguration, in der sie die Ablassöffnung (9) zumindest teilweise offen lassen, konfiguriert werden können, wobei die Schließmittel (14; 15) derart konfiguriert sind, das sie in der offenen Konfiguratior verbleiben, bis an der Ablassöffnung (9) eine Druckdifferenz besteht, die höher ist als ein vorbestimmter Druckdifferenzwert zwischen der internen (2) und der externen (3) Seite der Fensterbaugruppe (1), und dass sie sich folgend auf den Druckdifferenzabfall unter den vorbestimmten Wert in die geschlossene Konfiguration bewegen, dadurch gekenntzeichnet, dass der Hauptrahmen (4 eine Service-Öffnung (22) begrenzt und die Fensterbaugruppe (11 ein Service-Fenster (23) aufweist, das zwischen einer geschlossenen Position, in der das Service-Fenster (23) die Service-Öffnung (22) schließt, und einer offenen Position, in der das Service-Fenster (23) die Service-Öffnung (22) zumindest teilsweise offen lässt, bewegbar ist, wobei die Service-Öffnung (22) in Relation zur Ablassöffnung (9) vorne angeordnet ist.

2. Fensterbaugruppe (1) nach Anspruch 1, wobei die Schließmittel (14; 15) derart konfiguriert sind, dass sie in der geschlossenen Konfiguration verbleiben, wenn im Wesentlichen keine Druckdifferenz zwischen der Ablassöffnung (9) und der inneren (2) und äußeren (3) Seite der Fensterbaugruppe (1) vorhanden ist.

3. Fensterbaugruppe (1) nach Anspruch 1 oder 2, aufweisend Rückführmittel, die ausgelegt sind, die Schließmistel (14; 15) ausgehend von der offenen Konfiguration oder von einer Zwischen konfiguration zwischen der offenen und dergeschlossenen Konfiguration in ihre geschlossene Konfiguration zu bringen.

4. Fensterbaugruppe (1) nach dem vorhergehenden Anspruch, wobei die Rückführmittel elastische Mittel umfassen.

5. Fensterbaugruppe (1) nach einem der vorhergehenden Ansprüche, wobei die Schließmittel ein oder mehrere Schließelemente (15) aufweisen, die an einer oder mehreren jeweiligen Abschnitten der Ablassöffnung (9) angeordnet sind, sodass die Ablassöffnung (9) geschlossen ist, wann alle Schließelemente (15) in der geschlossenen Konfiguration sind.

6. Fensterbaugruppe (1) nach Anspruch 5, wobei das eine oder die mehreren Schließelemente (15) im Wesentlichen steife Schottwände umfassen, die in Relation zum Hauptrahmen (4) um Drehachsen drehbar sind, die derart ausgerichtet sind, dass sie in Relation zur Bewegungsrichtung (D) des Fahrzeugs, wenn die Fensterbaugruppe (1) damit verbunden ist, quer oder parallel angeordnet sind.

7. Fensterbaugruppe (1) nach Anspruch 5, wobei das eine oder die mehreren Schließelemente (15) flexible Membranen umfassen, die mit dem Hauptrahmen (4) an Verbindungsglieder verbunden sind, die derart ausgerichtet sind, dass sie in Relation zur Bewegungsrichtung (D) des Fahrzeugs, wenn die Fensterbaugruppe (1) damit verbunden ist, quer oder parallel angeordnet sind.

8. Fensterbaugruppe (1) nach einem der vorhergehenden Ansprüche, wobei die Schließelemente ein Luftgebläse (18) aufweisen, das mit dem Hauptrahmen (4) an der Ablassöffnung (9) verbunden oder verbindbar ist.

9. Fensterbaugruppe (1) nach einem der vorhergehenden Ansprüche, wobei das Service-Fenster (23) in Relation zum Hauptrahmen (4) entsprechend einer Schieberichtung schiebend bewegbar ist, die im Wesentlichen parallel oder quer in Relation zur Bewegungsrichtung (0) des Fahrzeugs Lst, wenn die Fensterbaugruppe (1) damit verbunden ist.

10. Fahrzeug, das eine Fensterbaugruppe (1) nach einem der vorhergehenden Ansprüche aufweist.

11. Fahrzeug nach dem vorhergehenden Anspruch, aufweisend eine Fahrerkabine mit einem Fahrersitz, der geeignet ist, den Fahrer des Fahrzeugs aufzunehmen, wobei sich die Fensterbaugruppe (1) neben dem Fahrersitz befindet.

12. Fahrzeug nach dem vorhergehenden Anspruch, aufweisend eine Rückwand, welche die Fahrerkabine hinten begrenzt, wobei sich die Ablassöffnung (9) der Fensterbaugruppe in Relation zur Rückwand vorne befindet.

13. Fahrzeug nach einem der Ansprüche 10 bis 12, enthalten in der Gruppe, die besteht aus: einem Lastkraftwagen, einer Straßenbahn, einem Bus, einer Untergrundbahn.

## Revendications

1. Ensemble fenêtre (1) pour un véhicule, ayant un côté interne (2) et un côté externe (3), destinés à être dirigés vers l'intérieur et l'extérieur du véhicule, respectivement, ledit ensemble fenêtre (1) comprenant un cadre principal (4) délimitant une ouverture de décharge (9) et des moyens de fermeture (14 ; 15) de ladite ouverture de décharge (9), qui peuvent être configurés selon une configuration fermée, dans laquelle ils maintiennent l'ouverture de décharge (9) fermée, et une configuration ouverte, dans laquelle L1s laissent l'ouverture de décharge (9) au moins partiellement ouverte, lesdits moyens de fermeture (14 ; 15) étant configurés de telle sorte qu'ils restent dans la configuration ouverte jusqu'à ce qu'au niveau de l'ouverture de décharge (9) une différence de pression demeure supérieure à une valeur prédéterminée de différence de pression entre lesdits côtés interne (2) et externe (3) de l'ensemble fenêtre (1), et qu'ils se déplacent à la configuration fermée à la suite de la chute de ladite différence de pression au-dessvus de ladite valeur prédéterminée, **caractérisé par le fait que** ledit cadre principal (4) délimite une ouverture de service (22) et que ledit ensemble fenêtre (1) comprend une fenêtre de service (23) déplaçable entre une position fermée, dans laquelle la fenêtre de service (23) ferme l'ouverture de service (22), et une position ouverte, dans laquelle la fenêtre de service (23) laisse l'ouverture de service (22) au moins partiellement ouverte, ladite ouverture de service (22) étant agencée à l'avant par rapport à ladite ouverture de décharge (9).

2. Ensemble fenêtre (1) selon la revendication 1, dans lequel lesdits moyens de fermeture (14 ; 15) sont configurés de telle sorte qu'ils restent dans la configuration fermée lorsque sensiblement aucune différence de pression n'est présente entre: L'ouverture de décharge (9) et lesdits côtés interne (2) et externe (3) de l'ensemble fenêtre (1).

3. Ensemble fenêtre (1) selon l'une des revendications 1 ou 2, comprenant des moyens de rappel aptes à forcer les moyens de fermeture (14 ; 15) vers leur configuration fermée à partir de la configuration ouverte ou à partir d'une configuration intermédiaire entre lesdites configurations ouverte et fermée.

4. Ensemble fenêtre (1) selon la revendication précédente, dans lequel lesdits moyens de rappel comprennent des moyens élastiques.

5. Ensemble fenêtre (1) selon l'une quelconque des revendications précédentes, dans lequel lesdits moyens de fermeture comprennent un ou plusieurs éléments de fermeture (15) disposés à une ou plusieurs parties respectives (16) de ladite ouverture de décharge (9), de telle sorte que, lorsque tous les éléments de fermeture (15) sont dans la configuration fermée, ladite ouverture de décharge (9) est fermée.

6. Ensemble fenêtre (1) selon la revendication 5, dans lequel ledit ou lesdits éléments de fermeture (15) comprennent des cloisons sensiblement rigides, aptes à pivoter par rapport audit cadre principal (4) autour d'axes de rotation orientés de telle sorte qu'ils sont agencés transversalement ou parallèlement à la direction de déplacement (D) dudit véhicule lorsque l'ensemble fenêtre (1) est associé à celui-ci.

7. Ensemble fenêtre (1) selon la revendication 5, dans lequel ledit ou lesdits éléments de fermeture (15) comprennent des membranes souples reliées audit cadre principal (4) à des voies de liaison orientées de telle sorte qu'elles sont agencées transversalement ou parallèlement à la direction de déplacement (D) dudit véhicule lorsque l'ensemble fenêtre (1) est associé à celui-ci.

8. Ensemble fenêtre (1) selon l'une quelconque des revendications précédentes, dans lequel .Lesdits moyens de fermeture comprennent une souffleuse d'air (18) reliée ou apte à être reliée audit cadre principal (4) au niveau de l'ouverture de décharge (9).

9. Ensemble fenêtre (1) selon l'une quelconque des revendications précédentes, dans lequel Ladite fenêtre de service (23) est déplaçable de manière coulissante par rapport audit cadre (4) selon une direction de coulissement sensiblement parallèle ou transversale à la direction de déplacement (D) dudit véhicule lorsque l' ensemble fenêtre (1) est associé à celui-ci.

10. véhicule comprenant un ensemble fenêtre (1) selon l'une quelconque des revendications précédentes.

11. Véhicule selon la revendication précédente, comprenant une cabine de conducteur ayant un siège conducteur approprié pour recevoir le c;onducteur du véhicule, ledit ensemble fenêtre (1) étant disposé à côté du siège conducteur.

12. Véhicule selon la revendication précédente, comprenant une paroi arrière qui délimita la cabine de conducteur à l'arrière, ladite ouverture de décharge (9) de l'ensemble fenêtre étant disposée à l'avant par rapport à ladite paroi arrière.

13. Véhicule selon l'une quelconque des revendications 10 à 12, compris dans le groupe constitué par : un camion, un tramway, un autobus, un métro.
